# EUROPEAN PATENT SPECIFICATION

(11) **EP 1 801 906 B1**
(45) Date of publication and mention of the grant of the patent: **05.12.2018**
(21) Application number: 06026330.8
(22) Date of filing: 19.12.2006
(51) Int. Cl.: B62M 7/02, B62M 7/12, B60L 11/18, H01M 8/04, H01M 16/00, H01M 8/04828, H01M 8/04007, H01M 8/04223, H01M 8/0432, H01M 8/04537, H01M 8/1018

(54) **Power supply system for hybrid vehicle**
Stromversorgungssystem für ein Hybridfahrzeug
Systeme d'alimentation électrique pour un véhicule hybride

(30) Priority: 21.12.2005 JP 2005367419
(43) Date of publication of application: 27.06.2007
(73) Proprietor: Yamaha Hatsudoki Kabushiki Kaisha, Shizuoka-ken Shizuoka 438-8501 (JP)
(72) Inventor: Kurosawa, Atsushi, Iwata-shi Shizuoka-ken 438-8501 (JP)
(74) Representative: Grünecker Patent- und Rechtsanwälte PartG mbB

(56) References cited:
- EP-A1- 1 091 436
- JP-A- 10 271 706
- JP-A- 2002 034 171
- US-A- 5 789 092
- US-A1- 4 670 702
- US-A1- 2004 144 579

## Description

The present invention relates to a hybrid power supply system having a fuel cell and a secondary battery.

Conventionally, vehicles such as, for example, automobiles include a fuel cell electric vehicle that runs using electric power generated by a fuel cell. In the fuel cell for such a fuel cell electric vehicle, generally, temperatures between 70°C and 80°C makes a suitable temperature range for generating the electric power. Therefore, it is necessary to raise the temperature of the fuel cell to the suitable temperature range in the earliest stage. For this purpose, the fuel cell is warmed up in a short time. As a device that warms up the fuel cell in such a short time, there is a hybrid power supply device which has a heater for heating coolant of the fuel cell to shorten the warm-up time.

However, according to this hybrid power supply device, because the heater used only in the warm-up mode is additionally required, the entire device is upsizing and is expensive. Thus, there is another fuel cell electric vehicle in which the warm-up of the fuel cell, which is necessary when the fuel cell is started under a low temperature condition, is made by controlling the fuel cell in such a manner that the power generating efficiency is deteriorated more than that of a normal operation mode (for example, see Patent Document 1). That is, in this fuel cell electric vehicle, an amount of heat is increased by the power generating efficiency being deteriorated to shorten the warm-up time.

Patent Document 1: JP-A-2002-313388

However, because the fuel cell of the conventional fuel cell electric vehicle described above is only allowed to generate electric power corresponding to the power required by the vehicle, the warm-up time is not greatly shortened. Also, if the power required by the vehicle largely fluctuates, the hydrogen and oxygen gases need to be instantly and largely supplied so that the fuel cell generates the power corresponding to the requirement. Respective supply devices thereof thus are upsizing. A controller for a hybrid power supply system is further described in US4670702.
The present invention is made to solve the problems described above, and an object thereof is to provide a hybrid power supply system that can shorten a warm-up time of a fuel cell and to inhibit generated electric power from being wasted.
This objective is solved in an inventive manner by a hybrid power supply system comprising: a fuel cell for reacting a hydrogen gas supplied from a hydrogen supply device with an oxygen gas supplied from an oxygen supply device to generate electric power; an operating device operating by using the electric power generated by the fuel cell; a temperature measuring device for measuring a temperature of the hybrid power supply system; a secondary battery; and a control device, wherein the control device is configured to control the electric power generated by the fuel cell in such a manner that the electric power becomes larger than electric power consumed by the operating device, in a warm-up mode, in which a temperature of the hybrid power supply system is not higher than a predetermined threshold temperature, and wherein a surplus of the electric power thus generated by the fuel cell is charged into the secondary battery.
According to a preferred embodiment, the hybrid power supply system further comprises: a cooling device for delivering a coolant to cool the fuel cell; and a temperature measuring device for measuring a temperature of the fuel cell or a temperature of the coolant representing the temperature of the hybrid power supply system.
Preferably, the control device is configured to make the electric power generated by the fuel cell smaller than the electric power consumed by the operating device during a preset time, after the warm-up mode completes and the hybrid power supply system is brought in a normal operation mode, and wherein the control device is configured to control the secondary battery to supply a shortage of electric power to be consumed by the operating device.

According to another preferred embodiment, the hybrid power supply system further comprises: an output current measuring device for measuring an output amount of current for the operating device; an output voltage measuring device for measuring an output amount of voltage for the operating device; and an electric power calculating device which is configured to calculate an amount of electric power to be consumed by the operating device based on the amount of current measured by the output current measuring device and the amount of voltage measured by the output voltage measuring device.

According to yet another preferred embodiment, the hybrid power supply system further comprises: a secondary battery voltage measuring device for measuring an amount of voltage of the secondary battery; a secondary battery current measuring device for measuring an amount of current of the secondary battery; a voltage-basis charge amount calculating device which is configured to calculate a charge amount of the secondary battery using the amount of voltage of the secondary battery measured by the secondary battery voltage measuring device; and a current-basis charge amount calculating device which is configured to calculate a charge amount of the secondary battery by integrating amounts of current that are charged to and discharged from the secondary battery using the amount of current measured by the secondary battery current measuring device.

Preferably, the control device is configured to determine a power generation amount of the fuel cell based on the charge amount calculated by the voltage-basis charge amount calculating device when the amount of current measured by the secondary battery current measuring device is not larger than a predetermined threshold current, and the control device is configured to determine the power generation amount of the fuel cell based on the charge amount calculated by the current-basis charge amount calculating device when the amount of current measured by the secondary battery current measuring device is larger than the predetermined threshold current.

According to another preferred embodiment, the hybrid power supply system further comprises a forbidding means configured to forbid the control device to enlarge the electric power generated by the fuel cell more than the electric power consumed by the operating device, when the charge amount of the secondary battery calculated by the voltage-basis charge amount calculating device is larger than a predetermined amount.

According to still another preferred embodiment, the hybrid power supply system further comprises a means storing a warm-up mode power generation amount map used in the warm-up mode, in which the temperature of the fuel cell or the temperature of the coolant is not higher than the predetermined threshold temperature.

Another preferred embodiment of the hybrid power supply system further comprises a means storing a normal operation mode power generation amount map for use in the normal operation mode in which the temperature of the fuel cell or the temperature of the coolant is higher than the predetermined threshold temperature.

Yet another preferred embodiment of the hybrid power supply system further comprises a timer, wherein the control device is configured to control the fuel cell to renew the power generation amount at predetermined intervals by referring one of the warm-up mode power generation amount map and the normal operation mode power generation amount map that corresponds to the mode which occurs when the fuel cell generates the electric power.

Preferably, the secondary battery is a lithium ion battery.

Further, preferably the hybrid power supply system is used as a power source for a motorcycle, a three-wheeled motored vehicle or a four-wheeled motored vehicle, wherein the operating device is a drive motor.

This objective is further solved, according to a method aspect, by a method to warm-up a fuel cell of a hybrid power supply system having a fuel cell and a secondary battery, wherein until a temperature of the hybrid power supply system is not higher than a predetermined threshold temperature, in a warm-up mode, electric power generation by the fuel cell is made larger than the amount of electric power consumed by the operating device, and wherein a surplus of the electric power thus generated by the fuel cell is charged into the secondary battery.

In the following, the present invention is explained in greater detail with respect to several embodiments thereof in conjunction with the accompanying drawings, wherein:
- FIG. 1: is a perspective view of a motorcycle having a hybrid power supply system according to one embodiment,
- FIG. 2: is a block diagram of the hybrid power supply system,
- FIG. 3: is a flowchart, showing a program for a fuel cell to generate electric power based on an amount of required power,
- FIG. 4: is a graph, showing the relationship between the required power generation amount and the power generation amount,
- FIG. 5: is a graph, showing the charge amount of a secondary battery and the power generation amount in response to various operating modes of the fuel cell,
- FIG. 6: is a flowchart, showing a program for the fuel cell to generate electric power based on the discharge amount of the secondary battery,
- FIG. 7: is a graph, showing the relationship between the discharge amount of the secondary battery and power generation amount of the fuel cell, and
- FIG. 8: is a graph, showing the charge amount of the secondary battery and the power generation amount of the fuel cell when the charge amount of the secondary battery is larger than a predetermined amount.

### Description of Reference Numerals and Symbols;

10: motorcycle
25: fuel cell
26: secondary battery
27: radiator
28: water pump
29a, 29b: coolant delivery pipe
31: hydrogen tank
32a, 32b, 38a, 38b: gas delivery pipe
33: valve
37: air blower
43: drive motor
50: power supply system control device
52a, 53a, 56a, 57a, 58, 59, 61, 62, 63, 65, 67: wiring
52, 53: temperature sensor
56, 57: current sensor
S: hybrid power supply system

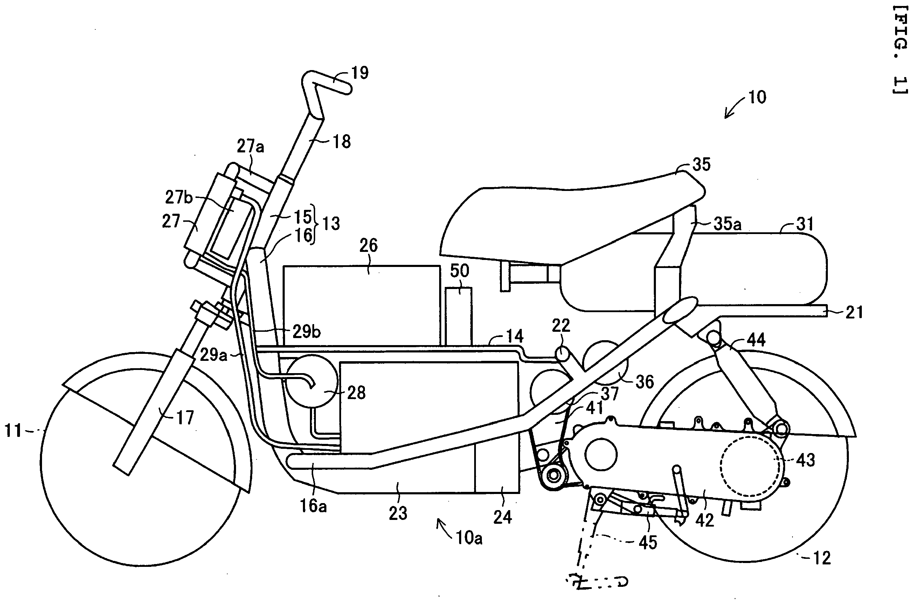

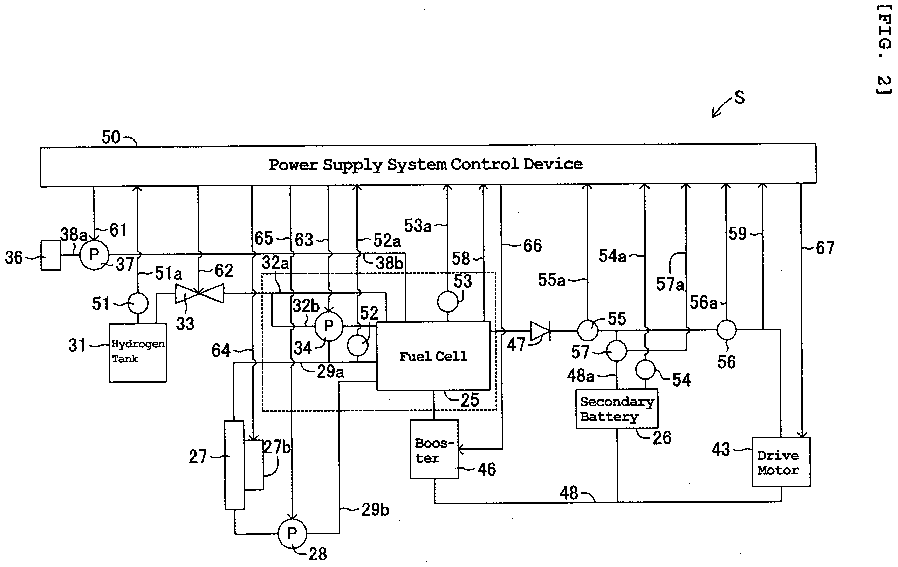

Hereunder, a hybrid power supply system configured in accordance with one embodiment will be described in detail using drawings. FIG. 1 shows a motorcycle 10 having the hybrid power supply system (see FIG. 2) of the embodiment. This motorcycle 10 includes a pair of wheels which are a front wheel 11 and a rear wheel 12 and a vehicle body 10a to which the pair of wheels are mounted for rotation. The vehicle body 10a includes a vehicle body frame 13 forming the major part of the vehicle body 10a and a sub frame 14 detachably mounted to the vehicle body frame 13. The vehicle body frame 13 includes a head pipe 15 forming the front portion of the vehicle body 10a and a down tube 16 extending rearward from the head pipe 15.

The front wheel 11 is rotatably supported at bottom ends of a front fork 17 whose lower portion is bifurcated. That is, the both bottom ends of the front fork 17 support the center shaft (not shown) of the front wheel 11 for rotation. The front wheel 11 is therefore rotational about the axis of the center shaft. The bottom end of a steering shaft 18 disposed within the head pipe 15 is coupled with the top end of the front fork 17. This steering shaft 18 is inserted into the head pipe 15 under a condition that the steering shaft 18 is pivotable about the axis of the head pipe 15. The top end of the steering shaft 18 protrudes from the head pipe 15 upward. Handlebars 19 extending generally horizontally are coupled with the top end of the steering shaft 18.

Therefore, when the handlebars 19 are manipulated to pivot about the axis of the steering shaft 18, the front wheel 11 changes its direction rightward or leftward about the axis of the front fork 17 in accordance with a pivotal amount of the steering shaft 18. Each of the right and left ends of the handlebars 19 has a grip (not shown). One of the grips is attached for pivotal movement about the axis thereof to form an accelerator for adjusting the drive power of a drive motor 43 described later, in addition to that the particular grip is used as a grip portion which is gripped by a hand. The other grip is fixed to the handlebars 19 to be used as the other grip portion which is gripped by the other hand. Brake levers (not shown) are disposed adjacent to the respective grips. The brake levers are urged to be spaced apart from the respective grips, and restrain the rotations of the front wheel 11 and the rear wheel 12 by being pulled toward the grips.

The down tube 16 is formed with a pair of main frames 16a (only one of them is shown) which bend, and the front ends (top ends) thereof are respectively coupled with the lateral sides of a bottom end portion of the head pipe 15. The respective main frames 16a extend obliquely downward and rearward, while widening the distance therebetween, from the portions coupled with the head pipe 15, and then bend to extend horizontally rearward. Further, rear portions of the respective main frames 16a extend obliquely rearward and upward while keeping the distance therebetween. The rear ends of the respective main frames 16a are coupled with a plate-like attaching member 21 extending horizontally.

A cross member 22 extends between the top surfaces of the rear portions of the respective main frames 16a. Each end portion of the cross member 22 generally turns at a right angle to configure a generally C-channel. Turning ends are coupled with the respective main frames 16a so that a body portion protrudes upward from both of the main frames 16a. A positioning base 23 extends between the bottom ends of the respective main frames 16a to protrude downward at a location between the main frames 16a. The top surface of the positioning base 23 is formed as a recess. A fuel cell container 24 is put in the recess. A fuel cell 25 (see FIG. 2) is contained in the interior of the fuel cell container 24.

The sub frame 14, which has a plate-like shape, is mounted between the front portions of the respective main frames 16a forming the down tube 16 and the cross member 22 extending between the rear portions of the respective main frames 16a. A secondary battery 26, which is a lithium ion battery, is fixed to the top surface of a front portion positioned slightly forward more than the center portion of the sub frame 14. A power supply system control device 50 which forms a control device of the present embodiment is fixed to the top surface of a rear portion of the sub frame 14.

A radiator 27 is attached to the front portion of the head pipe 15 via attaching members 27a. A fan 27b for cooling the radiator by air is attached to the rear side of the radiator 27 (between the radiator 27 and the head pipe 15). A water pump 28 is attached to a portion positioned in front of the fuel cell container 24 in the front portion of the down tube 16 and also positioned lower than the sub frame 14 (the secondary battery 26). The radiator 27 and the fuel cell 25 are connected to each other by a coolant delivery pipe 29a through which coolant flows from the fuel cell 25 to the radiator 27. The coolant delivery pipe 29a extends from the fuel cell 25 to the radiator 27 via a front surface of the fuel cell container 24.

Another coolant delivery pipe 29b extends from the radiator 27 to the water pump 28 through which the coolant flows from the radiator 27 to the fuel cell 25. The coolant delivery pipe 29b further extends from the water pump 28 to the fuel cell container 24 and enters the interior from a front surface of the fuel cell container 24 to be connected to the fuel cell 25. Because of this arrangement, when the water pump 28 operates, the coolant in the radiator 27 is delivered to the fuel cell 25 through the coolant delivery pipe 29b to cool the fuel cell 25. Then, the coolant absorbing the heat by cooling the fuel cell 25 is returned to the radiator 27 through the coolant delivery pipe 29a and is cooled by the fan 27b while passing through the radiator 27.

A hydrogen tank 31 which is filled with hydrogen to be supplied to the fuel cell 25 and functions as a hydrogen supply device of the present embodiment is attached to the top surface of an attaching member 21 coupled with rear end portions of the respective main frames 16a. As shown in FIG. 2, the hydrogen tank 31 is connected to a hydrogen gas supply port of the fuel cell 25 through a gas delivery pipe 32a which functions as an outward path. Also, a hydrogen gas discharge port of the fuel cell 25 is connected to a certain portion of the gas delivery pipe 32a through the gas delivery pipe 32b which functions as a homeward path 32b. A valve 33 for selectively opening and closing the gas delivery pipe 32a is placed near the hydrogen tank 31 in the gas delivery pipe 32a. A circulating pump 34 for returning the hydrogen gas discharged through the hydrogen gas discharge port of the fuel cell 25 is placed in the gas delivery pipe 32b.

Therefore, operating the circulating pump 34 under a condition that the valve 33 is open allows the hydrogen gas in the hydrogen tank 31 to be supplied to the fuel cell 25 through the gas delivery pipe 32a. The remaining hydrogen gas, which has not reacted in the fuel cell 25, returns to the gas delivery pipe 32a through the gas delivery pipe 32b and merges into a hydrogen gas newly sent out to the gas delivery pipe 32a from the hydrogen tank 31. The hydrogen gas then circulates in the gas delivery pipes 32a, 32b until both the hydrogen gas and oxygen gases react in the fuel cell 25. A seat 35 is disposed at a top portion of a front section of the hydrogen tank 31. This seat 35 is coupled with the rear portions of the respective main frames 16a via support members 35a.

An air filter 36 is placed at a location rearward of the cross member 22 in the rear portions of both main frames 16a and is attached thereto. An air blower 37 is placed at a location in front of the cross member 22 in the rear portions of the main frames 16a and is attached thereto. Additionally, positioning bases (not shown) are disposed between the respective main frames 16a in the rear portions of the main frames 16a. The air filter 36 and the air blower 37 are fixed to the down tube 16 via the positioning bases.

The air filter 36 and the air blower 37 and also the air blower 37 and the fuel cell 25 are connected to each other counterpart through gas delivery pipes 38a, 38b shown in FIG. 2, respectively. Outside air is sucked in by the operation of the air blower 37 through the air filter 36 to be introduced into the fuel cell 25. Foreign matters are removed when the air sucked into the air filter 36 passes through the air filter 36. A rear arm (not shown) formed with a pair of arm members extending rearward is coupled with lower sections of the rear portions of the respective main frames 16a through a coupling unit 41.

Rear end portions of the respective arm members of the rear arm rotatably support lateral side portions of a center shaft of the rear wheel 12; thereby, the rear wheel 12 is rotatable about an axis of the center shaft. A motor unit 42 is mounted to an outer surface of one of the arm members of the rear arm in such a manner that the motor unit 42 covers the arm member. Within the motor unit 42, the drive motor 43 and a reduction gear, both of which function as an operating device of the present embodiment that operates by the electric power generated by the fuel cell 25 are contained. The operation of the drive motor 43 rotates the rear wheel 12 so that the motorcycle 10 runs.

Rear cushions 44 extend between the rear end portions of the respective main frames 16a and top rear ends of the rear arm. The rear ends of the rear arm are swingable with the telescopic movement of the rear cushions 44. A drum brake (not shown) is attached to an inner surface of the motor unit 42. The drive motor 43 operates in accordance with an operative amount of the grip under control of the power supply system control device 50 so that the rear wheel 12 automatically generates the drive force.

This motorcycle 10 has a rotary stand 45 for keeping the motorcycle 10 in a standing state under a stop condition thereof. The stand 45 is raised when the motorcycle 10 runs as indicated by the actual line in FIG. 1, while the stand 45 is lowered to support the motorcycle 10 when the motorcycle 10 stays under the stop condition as indicated by the chain double-dashed line in FIG. 1.

The hybrid power supply system S includes a booster 46 for boosting voltage generated by the fuel cell 25 and a diode 47 for preventing current from flowing back. The fuel cell 25, the secondary battery 26, the drive motor 43, the booster 46, the diode 47 and wirings connecting them to each other together form an electric circuit 48. The respective devices forming the hybrid power supply system S has various sensors for detecting various conditions of the devices. Electric wirings connect the sensors and the power supply system control device 50 therebetween.

That is, the hydrogen tank 31 has a residual amount detecting sensor 51 for detecting a residual amount of the hydrogen within the hydrogen tank 31. The coolant delivery pipe 29a has a temperature sensor 52 for detecting a temperature of the coolant that is delivered from the radiator 27 to the fuel cell and is returned from the fuel cell 25 to the radiator 27 after cooling the fuel cell 25. The fuel cell 25 has a temperature sensor 53 for detecting a temperature of the fuel cell 25. The secondary battery 26 has another temperature sensor 54 for detecting a temperature of the secondary battery 26. The electric circuit 48 has a current sensor 55 for detecting an amount of current that flows through the electric circuit 48 and another current sensor 56 for detecting an amount of current that flows through the drive motor 43. The wiring 48a connected to the secondary battery 26 in the electric circuit 48 has a further current sensor 57 for detecting an amount of current that flows through the secondary battery 26.

The respective sensors including the sensor 51 are connected to the power supply system control device 50 through the respective wirings 51a, 52a, 53a, 54a, 55a, 56a, 57a and send the detected values to the power supply system control device 50 as electric signals. The fuel cell 25 and the power supply system control device 50 are connected to each other through a wiring 58. The electric circuit 48 and the power supply system control device 50 are connected to each other through a wiring 59. Because of having the wirings 58, 59, the respective amounts of voltage of the fuel cell 25 and the electric circuit 48 can be detected.

Wirings 61, 62, 63, 64, 65, 66, 67 for sending command signals from the power supply system control device 50 to the air blower 37, the valve 33, the circulating pump 34, the fan 27b, the water pump 28, the booster 46 and the drive motor 43 connect the power supply system control device 50 to the corresponding devices therebetween. The air blower 37 operates in response to a flow amount command signal from the power supply system control device 50 to supply air to the fuel cell 25. The valve 33 selectively opens and closes in response to an operation command signal from the power supply system control device 50 to supply hydrogen gases from the hydrogen tank 31 to the fuel cell 25.

The fuel cell 25 makes the oxygen in the air supplied from the air blower 37 and hydrogen supplied from the hydrogen tank 31 react with each other to generate electricity as well as water. The booster 46 boosts the electricity generated by the fuel cell 25 in response to a voltage command signal from the power supply system control device 50 to send the electricity to the drive motor 43 and also to send it to the secondary battery 26 to charge the secondary battery 26. The circulating pump 34 operates in response to an operation command signal from the power supply system control device 50 to return the hydrogen gas that have not reacted with the oxygen in the fuel cell 25 to the gas delivery pipe 32a through the gas delivery pipe 32b so that the hydrogen gas merge into the hydrogen gas that are newly introduced into the gas delivery pipe 32a.

The water pump 28 operates in response to an operation command signal from the power supply system control device 50 to circulate the coolant between the radiator 27 and the fuel cell 25 to keep the temperature of the fuel cell 25 at a predetermined temperature. The fan 27b operates in response to an operation command signal from the power supply system control device 50 to cool the radiator 27 by air. The drive motor 43 receives an operation signal generated in accordance with an operational amount of the grip that forms the accelerator to operate in response to the operation signal. Additionally, the electric power generated by the fuel cell 25 is properly charged into the secondary battery 26 and is discharged to the drive motor 43 from the secondary battery 25 that functions as an auxiliary power source whenever the drive motor 43 requires.

The power supply system control device 50 has a CPU, RAMs, ROMs, a timer and so forth. Various programs and data such as, for example, maps previously prepared are stored into the ROMs. The CPU controls the drive motor 43, the valve 33, the air blower 37, the water pump 28, etc. based on the operation of the grip or the like by the rider or the programs, etc. previously prepared. In addition, this motorcycle 10 has a power switch (not shown) for starting.

In this construction, when the rider drives the motorcycle 10, the rider, first, straddles the seat 35 to sit thereon. Then, the rider operates the power switch to bring to the ON state. Thereby, air is supplied from the air blower 37 and the hydrogen is supplied from the hydrogen tank 31 both to the fuel cell 25. The fuel cell 25 makes the oxygen in the air and the hydrogen which are supplied thereto react with each other to generate electricity. On this occasion, the operation of the water pump 28 delivers the coolant from the radiator 27 to cool the fuel cell 25 so as to keep it at the predetermined temperature. The fuel cell 25 discharges the water generated by the reaction of the oxygen and the hydrogen together with the exhaust air.

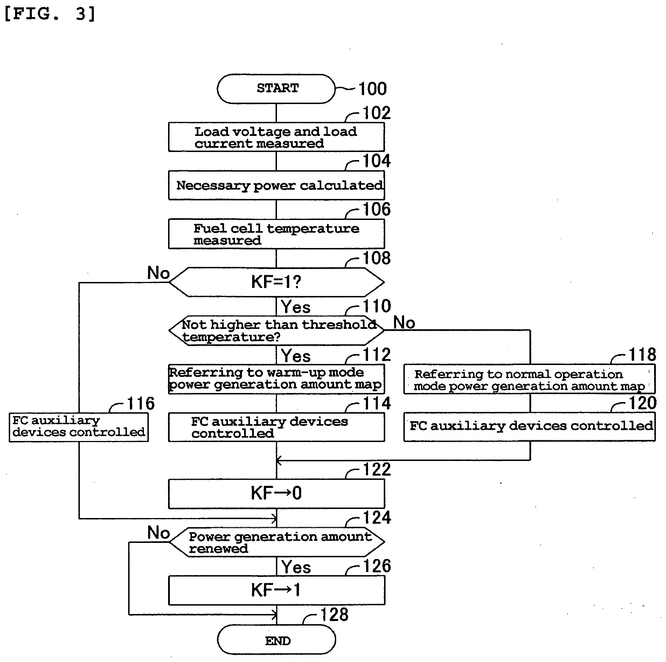

On this occasion, before the temperature of the fuel cell 25 reaches the suitable temperature for its operation, the power supply system control device 50 executes the program shown by the flowchart of FIG. 3 to have the fuel cell 25 make the power generation that is proper for the warm-up mode. After the warm-up completes, the power supply system control device 50 allows the fuel cell 25 to make the power generation that is proper for the normal operation mode. That is, the program for having the fuel cell 25 make the power generation is stored in the ROMs and is repeatedly executed at predetermined intervals by the CPU after the power switch is brought to the ON state. The program first starts at a step 100 and goes to a step 102 to measure load voltage and load current of the drive motor 43. An amount of the load current at this moment is obtained by a detection value of the current sensor 56, while an amount of the load voltage at the moment is provided via the wiring 59.

Next, the program goes to a step 104 to calculate a power amount that is required by the drive motor 43 using the amount of the load current and the amount of the load voltage both obtained at the step 102. The necessary power amount is provided as a product made by multiplication of the amount of the load current and the amount of the load voltage. Then, at a step 106, a temperature data of the fuel cell 25 detected by the temperature sensor 53 is taken, and, at a step 108, it is determined whether a renewal flag KF is "1" or not.

The renewal flag KF indicates whether a renewal process of the power generation amount, which will be described later, needs to be made because a predetermined time elapses, or not yet to be made. The renewal flag KF is set to "1" at the moment of the program's start. Accordingly, at the step 108, the determination "YES" is made, and the program goes to a step 110. At the step 110, it is determined whether the temperature of the fuel cell 25 obtained at the step 106 is lower than (or equal to) a threshold temperature or not. The threshold temperature is previously set and stored in the ROMs, and is set to, for example, about 70°C at which temperature the warm-up almost completes.

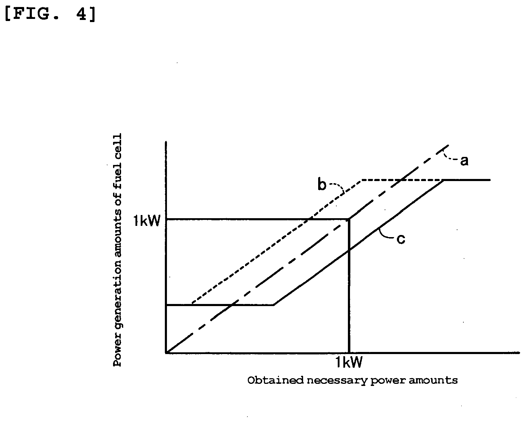

At this moment, if the temperature of the fuel cell 25 detected by the temperature sensor 53 is not higher than the threshold amount and the determination "YES" is made at the step 110, the program goes to a step 112. At the step 112, a warm-up mode power generation amount map is selected for reference from the maps (see FIG. 4), which are previously made and stored in the ROMs. That is, the map shown in FIG. 4 indicates power generation amounts of the fuel cell 25 versus necessary power amounts of the drive motor 43 calculated at the step 104. The chain one-dashed line [a] indicates relationships therebetween when the power generation amounts of the fuel cell 25 are equal to the necessary power amounts.

The dashed line [b] indicates the warm-up mode power generation amount map which is provided in accordance with the present invention, showing power generation amount of the fuel cell 25. It is set that the power generation amounts of the fuel cell 25 in the warm-up mode are larger than the power amounts necessary for the operations of the drive motor 43. As thus being set, not only the power generation amount of the fuel cell 25 but also the heat generation amount increases. Consequently, the temperature of the fuel cell 25 rises at the earliest stage to result a proper operation condition. On this occasion, the surplus power amount not used for the operation of the drive motor 43 is charged into the secondary battery 26. Next, the program goes to a step 114 to control the FC auxiliary devices (the air blower 37, the valve 33, the water pump 28, etc.) that make the fuel cell 25 operate. Thereby, the fuel cell 25 generates a power generation amount corresponding to the necessary power amount on the dashed line [b] of FIG. 4 and being calculated at the step 104.

Next, at a step 122, the renewal flag KF is set to "0." The program, then, goes to a step 124 to determine whether the power generation amount of the fuel cell 25 needs to be renewed or not. This determination is made by comparing an elapsing time measured by the timer with the preset time. The preset time is set so as to be short enough to exist within a range in which the power generation amount does not abruptly change and the respective FC auxiliary devices are not excessively burdened. At this moment, if the elapsing time does not reach the preset time and the determination "NO" is made at the step 124, the program goes to a step 128 to temporarily ends.

Again, the program starts the executions at and from the step 100. In the executions, again, the necessary power amount is provided by the processes of the steps 102, 104, and the temperature of the fuel cell 25 is provided by the process of the step 106. At the step 108, it is determined whether the renewal flag KF is "1" or not. On this occasion, the determination "NO" is made because the renewal flag KF is set to "0" at the step 122 in the previous executions of the program. The program then goes to a step 116. At this step 116, the same control as the control of the FC auxiliary devices made at the step 114 is made; thereby, the process that makes the fuel cell 25 generate the power amount corresponding to the necessary power amount described above continues.

The program goes to the step 124 to determine whether the power generation amount of the fuel cell 25 needs to be renewed or not. At this moment, if the elapsing time does not reach the preset time and the determination "NO" is made at the step 124, the program goes to the step 128 to temporarily ends. The steps 100 to 108, 116, 124 and 128 are repeated until the time elapses to reach the preset time and the determination "YES" is made at the step 124. When the elapsing time reaches the preset time and the determination "YES" is made, the program goes to the step 126 to set the renewal flag KF to "1."

The program goes to the step 128 to end. Again, the program starts at and from the step 100 to execute the steps 102 to 106. Then, at the step 108, the determination whether the renewal flag KF is "1" or not is made. On this occasion, because the renewal flag KF is set to "1" in the previous executions of the program, the determination "YES" is made. The program goes to 110. At the step 110, it is determined whether the temperature of the fuel cell 25 is not higher than the threshold temperature.

If the temperature of the fuel cell 25 is still lower than the threshold amount and the determination "YES" is made at the step 110, the program goes to the step 112 to select the warm-up mode power generation amount map indicated by the dashed line [b] of FIG. 4. The program then goes to the step 114 to control the FC auxiliary devices so as to make the fuel cell 25 generate the power amount corresponding to the necessary power amount on the dashed line [b] of FIG. 4. The power generation amount at this moment is the amount that is used for reference and renewed at the step 112.

The program then goes to the step 122 to set the renewal flag KF to "0." The program goes to the step 124 to determine whether the elapsing time starting from the end of the process of the step 114 reaches the preset time or not. At this moment, if the elapsing time does not reach the preset time and the determination "NO" is made at the step 124, the program goes to the step 128 to temporarily ends. Again the program starts at and from the step 100 and the steps 100 to 108, 116, 124 and 128 are repeated until the elapsing time reaches the preset time and the determination "YES" is made.

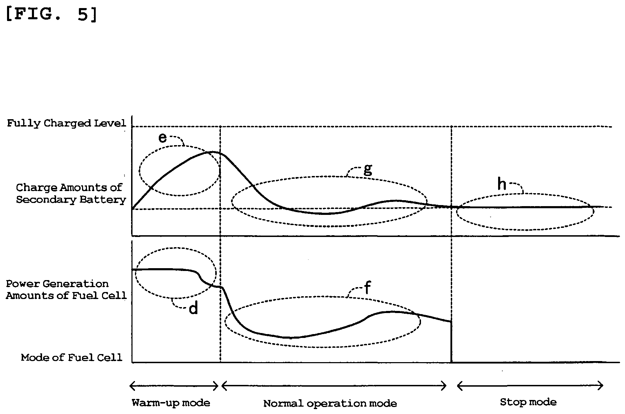

When the elapsing time reaches the preset time, the power generation amount is renewed in the next executions of the steps of the program. The steps 100 to 116 and 122 to 128 are repeated until the temperature of the fuel cell 25 detected by the temperature sensor 53 reaches the threshold temperature and the determination "NO" is made at the step 110. During the period, the fuel cell 25 generates the electric power based on the warm-up mode power generation amount map indicated by the dashed line [b] of FIG. 4. Relationship between the power generation amounts of the fuel cell 25 and the charge amounts of the secondary battery 26 are shown in a left portion of FIG. 5. That is, as indicated by the dashed line area [d] of FIG. 5, the power generation amount of the fuel cell 25 is large in the warm-up mode. On the other hand, the surplus of the power generated by the fuel cell 25 is charged into the secondary battery 26 so that the charge amount gradually increases as indicated by the dashed line area [e] of FIG. 5. Consequently, the secondary battery 26 approaches the full charge condition at a time around the end of the warm-up mode. When the temperature of the fuel cell 25 detected by the temperature sensor 53 reaches the threshold amount and the determination "NO" is made at the step 110, the program goes to a step 118.

At the step 118, the normal operation mode power generation amount map indicated by the actual line [c] of FIG. 4 is selected for reference. That is, this actual line [c] indicates the power generation amounts of the normal operation mode of the present invention. In the normal operation mode, the power generation amount of the fuel cell 25 is set to be smaller than the power amount calculated at the step 104 and needed for the operation of the drive motor 43. A shortage of electric power necessary for the operation of the drive motor 43 is supplemented by the secondary battery 26. Thereby, the secondary battery 26 keeps the charged condition that is sufficiently lower than the fully charged condition. Thus, the secondary battery 26 can have a long life.

Next, the program goes to a step 120 to control the operations of the FC auxiliary devices so as to make the fuel cell 25 operate in the normal operation mode. Thereby, the fuel cell 25 generates the power amount corresponding to the necessary power amount on the actual line [c] of FIG. 4. Then, at the step 122, the renewal flag KF is set to "0." At the subsequent step 124, it is determined whether the power generation amount needs to be renewed or not. If the elapsing time does not reach the preset time and the determination "NO" is made at the step 124, the program goes to the step 128 to temporarily end.

As discussed above, the steps 100 to 108, 116, 124 and 128 are repeated until the elapsing time reaches the preset time and the determination "YES" is made at the step 124. On this occasion, the same control as the control of the FC auxiliary devices made at the previous step 120 is made at the step 116; thereby, the process that makes the fuel cell 25 generate the power amount corresponding to the necessary power amount described above continues.

When the elapsing time reaches the preset time, the determination "YES" is made at the step 124. The program goes to the step 126 to set the renewal flag KF to "1." The program then goes to the step 128 to temporarily end. Again, the executions by the program start at and from the step 100. Afterwards, the steps 102-110, 116 and 118-128 are repeated. The processes are repeatedly made until the power switch is brought to the OFF condition. During the period, the fuel cell 25 generates the power amount corresponding to the necessary power amount on the actual line [c] of FIG. 4.

Relationships between the power generation amounts of the fuel cell 25 in the normal operation mode and the charge amounts of the secondary battery 26 are shown in a center portion of FIG. 5. That is, as indicated by the dashed line area [f] of FIG. 5, the power generation amounts of the fuel cell 25 are smaller than the power generation amounts in the warm-up mode. The power generation amount is set to be smaller than the power amount used for the operation of the drive motor 43 and greatly falls after the warm-up completes. Meanwhile, the secondary battery 26 discharges a shortage of the power generated by the fuel cell 25 to the drive motor 43. Thus, the charge amount of the secondary battery 26 gradually decreases as indicated by the dashed line area [g] of FIG. 5.

During the period in which the processes discussed above are executed, the motorcycle 10 repeats acceleration and deceleration in response to the operation of the grip. If the running speed of the motorcycle 10 needs to be lowered, the brake levers are operated as needed. Thereby, the motorcycle 10 reduces its speed in response to the operation amounts of the brake levers. When the rider wants to finish driving the motorcycle 10, the rider brings the power switch to the OFF condition. The rider also pivots the stand 45 downward to make it touch the ground. Thereby, the motorcycle 10 stays in the standing state.

Relationships between the power generation amounts in a stop mode of the operation of the hybrid power supply system S and the charge amounts of the secondary battery 26 are shown in a right portion of FIG. 5. As shown in FIG. 5, the power generation amount becomes "0" simultaneously with the fuel cell 25 stopping its operation and afterwards this condition continues. Because neither being charged by the fuel cell 25 nor supplying the power to the drive motor 43, the secondary battery 26 maintains the charge amount which the secondary battery 26 has when its operation ends as indicated by the dashed line area [h] of FIG. 5. Then, at the moment when the hybrid power supply system S is operated again, the power generation amount of the fuel cell 25 and the charge amount of the secondary battery 26 return to the initial states thereof in the warm-up mode of FIG. 5.

As thus described, in the hybrid power supply system S of this embodiment, when the temperature of the fuel cell 25 is not higher than the threshold temperature in the warm-up mode, the power generation amount of the fuel cell 25 is enlarged more than the necessary power amount for the operation of the drive motor 43; thereby, the heat generation amount of the fuel cell 25 can be enlarged in proportion to the power generation amount. Therefore, the fuel cell 25 can be warmed up in the earliest stage so as to change to the normal operation mode from the warm-up mode. Because the surplus of the electric power generated by the fuel cell 25 that is not consumed by the drive motor 43 is charged into the secondary battery 26, the electric power generated by the fuel cell 25 is not wasted. Also, because any devices such as a heater, for example, are not required, the hybrid power supply system S can be downsized.

When the hybrid power supply system S becomes the normal operation mode after the warm-up mode completes, the electric power generated by the fuel cell 25 is smaller than the power consumed by the drive motor 43. Also, the secondary battery 26 supplies a shortage of the power amount to be consumed by the drive motor 43. Accordingly, the secondary battery 26 can be a charge condition that is sufficiently less than the full charge condition. The secondary battery 26 thus can have a long life. Further, when the fuel cell 25 generates the electric power, one of the warm-up mode power generation amount map and the normal operation mode power generation amount map that corresponds to the particular mode is used for reference to renew the power generation amount at the predetermined intervals, i.e., in keeping regular intervals.

Thereby, when the necessary power for the drive motor 43 abruptly changes, the power generation amount can be slowly increased. As a result, the FC auxiliary devices of the fuel cell 25 and devices for the control system provided to the hybrid power supply system S are not required to have severe transitional characteristics. The hybrid power supply system S thus can be downsized and the weight reduction thereof can be realized. Because the secondary battery 26 is formed with the lithium ion battery, a compact secondary battery 26 having large energy density is obtained. Also, because the hybrid power supply system S is used as the power supply system of the motorcycle 10, the motorcycle 10 whose warm-up time can be short and which does not waste any power generated by the fuel cell 25 can be obtained.

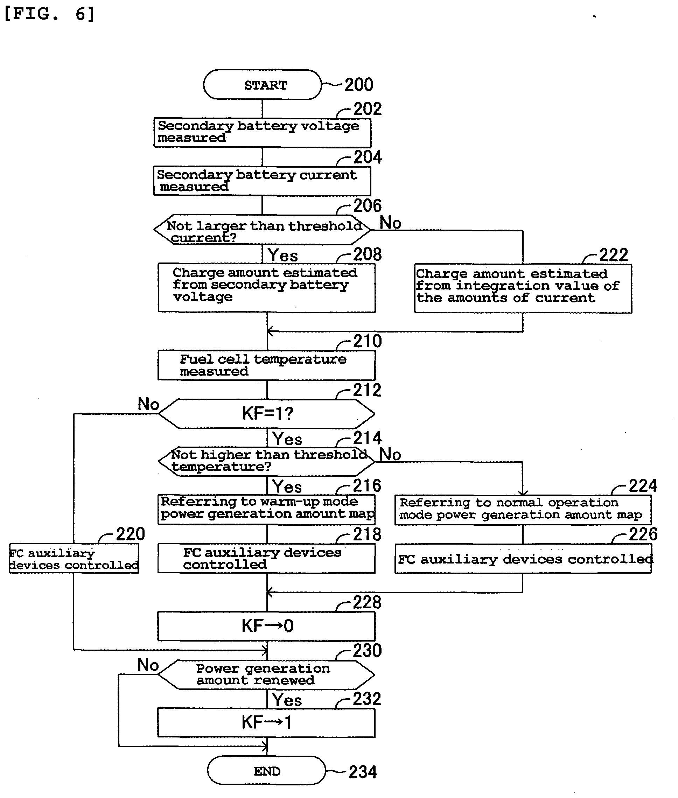

FIG. 6 shows another program for controlling the power generation amount of the fuel cell 25, modified in accordance with another embodiment. This program is also stored in the ROMs provided to the power supply system control device 50 and is repeatedly executed at predetermined intervals by the CPU after the power switch is brought to the ON state. The program first starts at a step 200 and goes to a step 202 to measure load voltage of the secondary battery 26. An amount of the load voltage is provided via the wiring 59 that connects the electric circuit 48 and the power supply system control device 50 to each other.

Next, the program goes to a step 204 to measure current of the secondary battery 26. An amount of this current is obtained by a detection value detected by the current sensor 57. Then, at a step 206, it is determined whether the amount of current of the secondary battery 26 of the fuel cell 25 obtained at the step 204 is not higher than a threshold amount or not. The threshold amount is previously stored in the ROMs and is set to be, for example, 2A. At this moment, if the amount of current of the secondary battery 26 detected by the current sensor 57 is not higher than the threshold amount and the determination "YES" is made, the program goes to a step 208.

At the step 208, a charge amount of the secondary battery 26 is obtained from the voltage amount obtained at the step 202. The charge amount is obtained based on a map (not shown) indicating relationships between voltage amounts and charge amounts. Then, at a step 210, a temperature data of the fuel cell 25 detected by the temperature sensor 53 is taken. At a step 212, it is determined whether the renewal flag KF is "1" or not. Like the renewal flag KF of the program of FIG. 3 described above, this renewal flag KF indicates whether a renewal process, which will be described later, needs to be made because a predetermined time elapses, or not yet to be made. The renewal flag KF is set to "1" at the moment of the program's start.

Accordingly, at the step 212, the determination "YES" is made, and the program goes to a step 214. At the step 214, it is determined whether the temperature of the fuel cell 25 obtained at the step 210 is not higher than a threshold temperature or not. The threshold temperature is previously set and stored in the ROMs, and is the same as the threshold amount at the step 110 of the program of FIG. 3 described above.

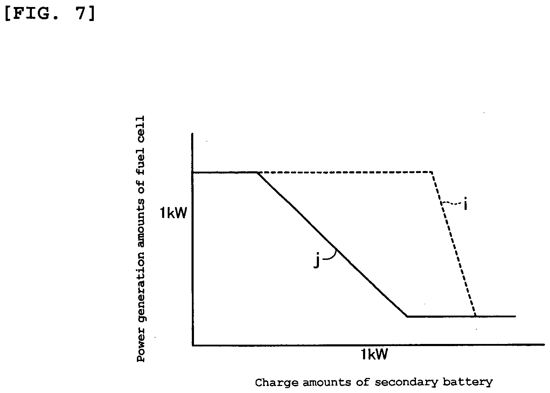

At this moment, if the temperature of the fuel cell 25 detected by the temperature sensor 53 is not higher than the threshold temperature, and the determination "YES" is made at the step 214, the program goes to a step 216. At the step 216, a warm-up mode power generation amount map is selected for reference from the maps (see FIG. 7), which are previously made and stored in the ROMs. That is, the map shown in FIG. 7 indicates power generation amounts of the fuel cell 25 versus charge amounts of the secondary battery 26.

The dashed line [i] of FIG. 7 is a warm-up mode power generation amount map indicating power generation amounts of the fuel cell 25 in the warm-up mode, while the actual line [j] is an operation mode power generation amount map indicating power generation amounts of the fuel cell 25 in the normal operation mode. As shown, it is set that the power generation amounts of the fuel cell 25 in the warm-up mode are larger than the power generation amounts of the fuel cell 25 in the normal operation mode. As thus being set, the heat generation amount of the fuel cell 25 increases in the warm-up mode and the temperature of the fuel cell 25 rises to result a proper operation condition at the earliest stage. On this occasion, the surplus power generated by the fuel cell 25 is charged into the secondary battery 26.

Next, the program goes to a step 218 and then executes processes of the steps 228 to 234. Because the processes at the steps 218, 228 to 234 are the same as the steps 114, 122 to 128 of the program of FIG. 3 described above, except that they are executed referring to the warm-up mode power generation amount map (charge amounts are based on voltage amounts of the secondary map) indicated by the dashed line [i] used for reference at the step 216, descriptions thereof are not repeated. After the processes at the steps 218, 228 to 234 complete, the program temporarily ends.

Again, the program starts at and from the step 200. In the executions, similarly, an amount of voltage of the secondary battery 26 is obtained at the step 202, and then an amount of current of the secondary battery 26 is obtained at the step 204. At the step 206, it is determined whether the amount of current of the secondary battery 26 is not higher than the threshold temperature. If the amount of current detected by the current sensor 57 is still not higher than the threshold amount and the determination "YES" is made at the step 206, the program goes to the step 208. At the step 208, a charge amount of the secondary battery 26 is obtained from the voltage amount obtained at the step 202.

Then, at a step 210, a temperature data of the fuel cell 25 detected by the temperature sensor 53 is taken. At the step 212, it is determined whether the renewal flag KF is "1" or not. On this occasion, if the determination "NO" is made at the step 230 in the previous executions of the program and the process at the step 232 has not been executed, the renewal flag KF is kept to be "0" by the process at the step 228. Therefore, the determination "NO" is made at the step 212, the program goes to a step 220. At the step 220, the same control as the FC auxiliary devices' control made at the step 218 is made to continue the process in which the fuel cell 25 generates the power amount corresponding to the necessary power amount described above. The steps 200 to 212, 220, and 230 to 234 are repeated until the determination "YES" is made at the step 230.

When the determination "YES" is made at the step 230, the renewal flag KF is set to "1" at the step 232. The determination "YES" is made at the step 212 in the next executions of the program. Afterwards, the FC auxiliary devices are controlled based on the renewed power generation amount. As long as the determination "YES" is made at the steps 206 and 214, the warm-up mode process based on the voltage amount of the secondary battery 26 is repeated while renewing the power generation amount at predetermined intervals. When the amount of current of the secondary battery 26 detected by the current sensor 57 becomes not lower than the threshold amount and the determination "NO" is made at the step 206, the program goes to a step 222.

At the step 222, a charge amount of the secondary battery 26 is obtained from an integration value of the amounts of current obtained at the step 204. The integration value is equal to amounts of current integrated and stored into the RAMs as a data every execution of the program by the power supply system control device 50. Then, at the step 210, a data of the temperature detected by the temperature sensor 53 is taken. At the step 212, it is determined whether the renewal flag KF is "1" or not. At this moment, the determination that the renewal flag KF is "1" is made and the program goes to the step 214 to determine whether the temperature of the fuel cell 25 is not higher than the threshold temperature.

If the temperature of the fuel cell 25 detected by the temperature sensor 53 does not reach the threshold amount and the determination "YES" is made at the step 214, the program goes to the step 216. Afterwards, the steps 218 and 228-234 described above are executed. As long as the determination "NO" is made at the step 206 and the determination "YES" is made at the step 214, the warm-up mode processes based on the integration amount of current of the secondary battery 26 are executed. During the period, the fuel cell 25 generates the electric power based on the warm-up mode power generation amount map indicated by the dashed line [i] of FIG. 7.

When the temperature of the fuel cell 25 detected by the temperature sensor 53 reaches the threshold temperature and the determination "NO" is made at the step 214, the program goes to a step 224. At the step 224, the normal operation mode power generation amount map indicated by the actual line [j] of FIG. 7 is selected for reference. That is, this actual line [j] indicates power generation amounts in the normal operation mode. The power generation amounts of the fuel cell 25 in the normal operation mode is set to be smaller than the power generation amounts thereof in the warm-up mode. In this mode, the secondary battery 26 supplements a shortage of the power amount necessary for the operation of the drive motor 43.

Next, the program goes to a step 226 to control the operations of the respective FC auxiliary devices so as to operate the fuel cell 25 in the normal operation mode.. Thereby, the fuel cell 25 generates a power amount corresponding to a charge amount of the secondary battery 26 on the actual line [j] of FIG. 7. At the step 228, it is determined whether the renewal flag KF is set to "0," and then the program goes to the step 230 to determine whether the power generation amount needs to be renewed. If the elapsing time does not reach the preset time and the determination "NO" is determined at the step 230, the program temporarily ends. Again, the program starts at and from the step 200. Afterwards, the steps 202 to 206, 220, 222, 210 to 214 and 224 to 234 are repeated. Those steps are repeated until the power switch is brought to the OFF condition. During the period, the fuel cell 25 generates a power generation amount corresponding to a charge amount of the secondary battery 26 on the actual line [j] of FIG. 7.

Relationships between the power generation amounts of the fuel cell 25 and the charge amounts of the secondary battery 26 in the executions of the program of FIG. 6 are generally the same as those shown in the graph of FIG. 5. Therefore, the power generation amount of the fuel cell 25 in the warm-up mode and the power generation amount of the fuel cell 25 in the normal operation mode can be individually adjusted in response to the amount of the voltage or the integration amount of current of the secondary battery 26. The secondary battery 26 thus has no excessive burden. That is, the power generation amount of the fuel cell 25 can be adjusted based on the charge amount calculated by the power supply system control device 50 based on the voltage, or the charge amount calculated by the power supply system control device 50 based on the current, by the determination whether the amount of current of the secondary battery 26 is not larger than the threshold amount or larger than the threshold amount, in addition to the determination whether the temperature of the fuel cell 25 is not higher than the threshold temperature or higher than the threshold temperature. A more minute control thus can be made.

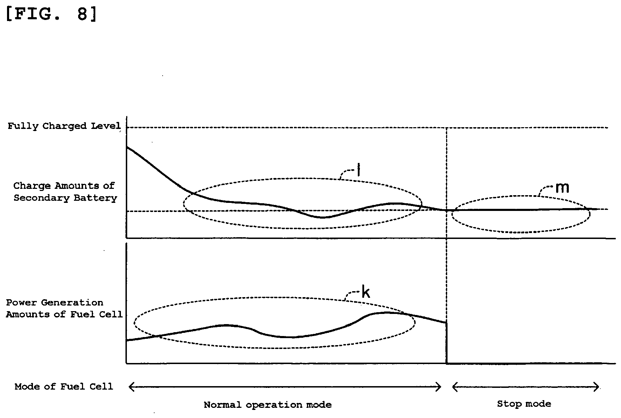

FIG. 8 shows relationships between the power generating amounts of the fuel cell 25 and the charge amounts of the secondary battery 26 in the processes such that the charge amount of the secondary battery 26 obtained at the step 208 is a large amount that is close to the full charge amount. In this state, the warm-up processes are omitted and the control of the normal operation mode is made from the initial stage. That is, as indicated by the dashed line area [k] in FIG. 8, the power generation amount of the fuel cell 25 varies with fluctuations which go up and down within a range that is slightly less than the electric power used for the operation of the drive motor 43. When the charge amount of the secondary battery 26 reaches the predetermined amount, the power generation amount is controlled to be the same amount as the power amount that is used for the operation of the drive motor 43.

Meanwhile, the secondary battery 26 discharges a shortage of the electric power generated by the fuel cell 25 to the drive motor 43. The charge amount of the secondary battery 26 thus gradually decreases as indicated by the dashed line area [I] of FIG. 8. This charge amount greatly falls when the fuel cell 25 starts, and then becomes almost a constant value to settle with the preset time elapsing. Thereby, the secondary battery 26 does not need to be an excessively highly charged condition. Thus, the deterioration of the secondary battery 26 can be inhibited and the safety against the excessive charge can be ensured.

The hybrid power supply system of the present teaching is not limited to the embodiments described above and can be properly changed to other embodiments. For example, in the embodiments described above, the hybrid power supply system S is mounted to the motorcycle 10. However, devices to which this hybrid power supply system is applied are not limited to the motorcycle 10 and can include vehicles such as, for example, a three-wheeled motored vehicle and a four-wheeled motored vehicle and devices other than the vehicles which uses electric power. Also, in the embodiment described above, the control that omits the warm-up processes if the initial charge amount of the secondary battery 26 is large can be used in the program of FIG. 6. However, this control can be applied to the program of FIG. 3 by providing a step in which the charge amount of the secondary battery is calculated.

The current sensors 55, 56, 57 for detecting the current flowing through the electric circuit 48 are provided in the embodiments described above. However, any one of the current sensors 55, 56, 57 may be omitted. Voltage sensors may be provided in the wirings 58, 59. Thereby, the voltage can be accurately detected. It is determined whether the temperature of the fuel cell 25 is not higher than the threshold temperature in the flowchart of FIG. 3 described above. The temperature, however, may be the temperature of the coolant of the radiator 27. Also, the other components forming the hybrid power supply system S of the present teaching can be properly changed, any one of the components can be omitted, or any other components can be added.

In order to achieve the object, a constructive feature of the hybrid power supply system of one of the present embodiments is that the system includes: a fuel cell for reacting a hydrogen gas supplied from a hydrogen supply device with an oxygen gas supplied from an oxygen supply device to generate electric power; an operating device operating by using the electric power generated by the fuel cell; a cooling device for delivering a coolant to cool the fuel cell; a temperature measuring device for measuring a temperature of the fuel cell or a temperature of the coolant; a control device for controlling the electric power generated by the fuel cell in such a manner that the electric power becomes larger than electric power consumed by the operating device, in a warm-up mode in which the temperature measured by the temperature measuring device is not higher than a predetermined threshold temperature; and a secondary battery into which a surplus of the electric power generated by the fuel cell is charged.

In the hybrid power supply system according to the present embodiment, when the temperature of the fuel cell or the temperature of the coolant for cooling the fuel cell is equal to or lower than the predetermined threshold temperature, i.e., when the fuel cell is in the warm-up mode, the power generation amount is enlarged more than the electric power to be consumed by the operating device. Thereby, the amount of heat of the fuel cell can be larger. Therefore, the fuel cell can be warmed up in the earliest stage to shorten the time necessary for the warm-up. Because the surplus of the electric power generated by the fuel cell that is not consumed by the operating device is charged into the secondary battery, the electric power generated by the fuel cell is not wasted. Also, according to this embodiment, because the warm-up is expedited only by controlling the power generation amount of the fuel cell, any heater that is only used for the warm-up, any control equipment for adjusting a gas supplying pressure or a gas flow rate an any devices such as, for example, valves for switching the coolant are not necessary. As a result, the hybrid power supplying system can be downsized.

Another constructive feature of the hybrid power supply system of one of the present embodiments is that the control device makes the electric power generated by the fuel cell smaller than the electric power consumed by the operating device during a preset time after the warm-up mode completes and the hybrid power supply system is brought in a normal operation mode, and the control device controls the secondary battery to supply a shortage of electric power to be consumed by the operating device.

According to this feature, the secondary battery is prevented from being excessively charged so as to have a long life. The predetermined time in this feature can be a time previously set or can be a time that continues until a normal operation of the hybrid power supply system ends.

A further constructive feature of the hybrid power supply system of one of the present embodiments is that the system further includes: an output current measuring device for measuring an output amount of current for the operating device; an output voltage measuring device for measuring an output amount of voltage for the operating device; and an electric power calculating device for calculating an amount of electric power to be consumed by the operating device based on the amount of current measured by the output current measuring device and the amount of voltage measured by the output voltage measuring device. Thereby, the electric power to be consumed by the operating device can be accurately calculated so that the power generation amount of the fuel cell can be set to a proper level.

A further constructive feature of the hybrid power supply system of one of the present embodiments is that the system further includes: a secondary battery voltage measuring device for measuring an amount of voltage of the secondary battery; a secondary battery current measuring device for measuring an amount of current of the secondary battery; a voltage-basis charge amount calculating device for calculating a charge amount of the secondary battery using the amount of voltage of the secondary battery measured by the secondary battery voltage measuring device; and a current-basis charge amount calculating device for calculating a charge amount of the secondary battery by integrating amounts of current that are charged to and discharged from the secondary battery using the amount of current measured by the secondary battery current measuring device, wherein the control device determines a power generation amount of the fuel cell based on the charge amount calculated by the voltage-basis charge amount calculating device when the amount of current measured by the secondary battery current measuring device is not larger than a predetermined threshold current, and the control device determines the power generation amount of the fuel cell based on the charge amount calculated by the current-basis charge amount calculating device when the amount of current measured by the secondary battery current measuring device is larger than the predetermined threshold current.

Thereby, the power generation amount of the fuel cell in the warm-up mode and the power generation amount of the fuel cell in the normal operation mode can be individually adjusted in response to the amount of voltage or the amount of current of the secondary battery. The charge amount of the secondary battery thus can be kept within a predetermined range. The secondary battery has no excessive burden, accordingly. That is, the power generation amount of the fuel cell can be adjusted based on the charge amount calculated by the voltage-basis charge amount calculating device or the charge amount calculated by the current-basis charge amount calculating device, by the determination whether the amount of current of the secondary battery is not larger than the threshold amount or larger than the threshold amount, in addition to the determination whether the temperature of the fuel cell or the coolant is not higher than the threshold temperature or higher than the threshold temperature. A more minute control thus can be made.

A further constructive feature of the hybrid power supply system of one of the present embodiments is that the system further includes a forbidding means for forbidding the control device to enlarge the electric power generated by the fuel cell more than the electric power consumed by the operating device, when the charge amount of the secondary battery calculated by the voltage-basis charge amount calculating device is larger than a predetermined amount. Thereby, because the secondary battery is not brought in the excessively highly charged condition, the deterioration of the secondary battery can be inhibited, and the safety against the excessive charge can be ensured. That is, the charge amount of the secondary battery is smaller than the charge amount of the starting moment if the charge amount is larger than the predetermined amount. Further, the forbidding means may be program-controlled and also applied to the aspects 1 through 3 described below.

A further constructive feature of the hybrid power supply system of one of the present embodiments is that the system further includes: a warm-up mode power generation amount map used in the warm-up mode in which the temperature of the fuel cell or the temperature of the coolant is not higher than the predetermined threshold temperature; a normal operation mode power generation amount map for use in the normal operation mode in which the temperature of the fuel cell or the temperature of the coolant is higher than the predetermined threshold temperature; and a timer, wherein the control device controls the fuel cell to renew the power generation amount at predetermined intervals by referring one of the warm-up mode power generation amount map and the normal operation mode power generation amount map that corresponds to the mode which occurs when the fuel cell generates the electric power.

Thereby, the charge amount of the secondary battery slowly changes relative to the load which is given when the power necessary for the operating device abruptly changes. The power generated by the fuel cell thus can be periodically and slowly changed. Therefore, auxiliary devices of the fuel cell and respective devices for the control system of the hybrid power supply system are not required to have severe transitional characteristics. As a result, the hybrid power supply system can be downsized and the weight reduction thereof can be realized.

A further constructive feature of the hybrid power supply system of one of the present embodiments is that the secondary battery is a lithium ion battery. Thereby, a compact secondary battery having large energy density is obtained. The deterioration of the lithium ion battery is likely to be expedited when it is almost fully charged under high temperature circumstances. In the present embodiments, however, the charge amount of the secondary battery is kept at a proper level. Thus, because of using the lithium ion battery as the secondary battery, the battery can be the secondary battery that is more superior.

A further constructive feature of the hybrid power supply system of one of the present embodiments is that the hybrid power supply system is used as a power source for a motorcycle, a three-wheeled motored vehicle or a four-wheeled motored vehicle, wherein the operating device is a drive motor. Thereby, a motorcycle, a three-wheeled motored vehicle or a four-wheeled motored vehicle whose warm-up time can be short and which does not waste any power generated by the fuel cell can be obtained.

The description above discloses (amongst others), according to a first preferred aspect, a hybrid power supply system comprising: a fuel cell for reacting a hydrogen gas supplied from a hydrogen supply device with an oxygen gas supplied from an oxygen supply device to generate electric power; an operating device operating by using the electric power generated by the fuel cell; a cooling device for delivering a coolant to cool the fuel cell; a temperature measuring device for measuring a temperature of the fuel cell or a temperature of the coolant; a control device for controlling the electric power generated by the fuel cell in such a manner that the electric power becomes larger than electric power consumed by the operating device, in a warm-up mode in which the temperature measured by the temperature measuring device is not higher than a predetermined threshold temperature; and a secondary battery into which a surplus of the electric power generated by the fuel cell is charged.

Further, according to a second preferred aspect, the control device makes the electric power generated by the fuel cell smaller than the electric power consumed by the operating device during a preset time after the warm-up mode completes and the hybrid power supply system is brought in a normal operation mode, and the control device controls the secondary battery to supply a shortage of electric power to be consumed by the operating device.

Further, according to a third preferred aspect, the hybrid power supply system further comprises: an output current measuring device for measuring an output amount of current for the operating device; an output voltage measuring device for measuring an output amount of voltage for the operating device; and an electric power calculating device for calculating an amount of electric power to be consumed by the operating device based on the amount of current measured by the output current measuring device and the amount of voltage measured by the output voltage measuring device.

Further, according to a fourth preferred aspect, the hybrid power supply system further comprises: a secondary battery voltage measuring device for measuring an amount of voltage of the secondary battery; a secondary battery current measuring device for measuring an amount of current of the secondary battery; a voltage-basis charge amount calculating device for calculating a charge amount of the secondary battery using the amount of voltage of the secondary battery measured by the secondary battery voltage measuring device; and a current-basis charge amount calculating device for calculating a charge amount of the secondary battery by integrating amounts of current that are charged to and discharged from the secondary battery using the amount of current measured by the secondary battery current measuring device, wherein the control device determines a power generation amount of the fuel cell based on the charge amount calculated by the voltage-basis charge amount calculating device when the amount of current measured by the secondary battery current measuring device is not larger than a predetermined threshold current, and the control device determines the power generation amount of the fuel cell based on the charge amount calculated by the current-basis charge amount calculating device when the amount of current measured by the secondary battery current measuring device is larger than the predetermined threshold current.

Further, according to a fifth preferred aspect, the hybrid power supply system further comprises a forbidding means for forbidding the control device to enlarge the electric power generated by the fuel cell more than the electric power consumed by the operating device, when the charge amount of the secondary battery calculated by the voltage-basis charge amount calculating device is larger than a predetermined amount.

Further, according to a sixth preferred aspect, the hybrid power supply system further comprises: a warm-up mode power generation amount map used in the warm-up mode in which the temperature of the fuel cell or the temperature of the coolant is not higher than the predetermined threshold temperature; a normal operation mode power generation amount map for use in the normal operation mode in which the temperature of the fuel cell or the temperature of the coolant is higher than the predetermined threshold temperature; and a timer, wherein the control device controls the fuel cell to renew the power generation amount at predetermined intervals by referring one of the warm-up mode power generation amount map and the normal operation mode power generation amount map that corresponds to the mode which occurs when the fuel cell generates the electric power.

Further, according to a seventh preferred aspect, the secondary battery is a lithium ion battery.

Further, according to an eighth preferred aspect, the hybrid power supply system is used as a power source for a motorcycle, a three-wheeled motored vehicle or a four-wheeled motored vehicle, wherein the operating device is a drive motor.

The description above further discloses, in order to provide a hybrid power supply system that can shorten a warm-up time of a fuel cell and to inhibit generated electric power from being wasted, an embodiment of a hybrid power supply system S having a fuel cell 25 and a secondary battery 26 is used as a power source of a drive motor 43 of a motorcycle 10, wherein an oxygen gas is supplied from an air blower 37 and a hydrogen gas is supplied from a hydrogen tank 31 to react with each other to make the fuel cell 25 generate electric power, wherein on this occasion, in a warm-up mode in which a temperature of the fuel cell 25 is not higher than a threshold temperature, the fuel cell 25 generates the power not smaller than the electric power to be consumed by a drive motor 43 and a surplus power is charged into the secondary battery 26, wherein in a normal operation mode after the warm-up completes, the electric power generated by the fuel cell 25 is smaller than the power consumed by the drive motor 43 and the secondary battery 26 supplies a shortage of the power, and wherein further, the secondary battery 26 is formed with a lithium ion battery.

## Claims

1. Hybrid power supply system comprising:
a fuel cell (25) for reacting a hydrogen gas supplied from a hydrogen supply device with an oxygen gas supplied from an oxygen supply device to generate electric power;
an operating device operating by using the electric power generated by the fuel cell (25);
a temperature measuring device for measuring a temperature of the hybrid power supply system;
a secondary battery (26); and
a control device,
wherein the control device is configured to control the electric power generated by the fuel cell (25) in such a manner that the electric power becomes larger than electric power consumed by the operating device, in a warm-up mode, in which a temperature of the hybrid power supply system is not higher than a predetermined threshold temperature, and wherein the electric power which corresponds to the electric power consumed by the operating device is supplied to the operating device, and a surplus of the electric power thus generated by the fuel cell (25) is charged into the secondary battery (26).

2. Hybrid power supply system according to claim 1, further comprising:
a cooling device for delivering a coolant to cool the fuel cell (25); and
a temperature measuring device for measuring a temperature of the fuel cell (25) or a temperature of the coolant representing the temperature of the hybrid power supply system.

3. Hybrid power supply system according to claim 1 or 2, wherein the control device is configured to make the electric power generated by the fuel cell (25) smaller than the electric power consumed by the operating device during a preset time, after the warm-up mode completes and the hybrid power supply system is brought in a normal operation mode, and wherein the control device is configured to control the secondary battery (26) to supply a shortage of electric power to be consumed by the operating device.

4. Hybrid power supply system according to one of the claims 1 to 3, further comprising:
an output current measuring device for measuring an output amount of current for the operating device;
an output voltage measuring device for measuring an output amount of voltage for the operating device; and
an electric power calculating device which is configured to calculate an amount of electric power to be consumed by the operating device based on the amount of current measured by the output current measuring device and the amount of voltage measured by the output voltage measuring device.

5. Hybrid power supply system according to one of the claims 1 to 3, further comprising:
a secondary battery voltage measuring device for measuring an amount of voltage of the secondary battery (26);
a secondary battery current measuring device for measuring an amount of current of the secondary battery (26);
a voltage-basis charge amount calculating device which is configured to calculate a charge amount of the secondary battery (26) using the amount of voltage of the secondary battery (26) measured by the secondary battery voltage measuring device; and
a current-basis charge amount calculating device which is configured to calculate a charge amount of the secondary battery (26) by integrating amounts of current that are charged to and discharged from the secondary battery (26) using the amount of current measured by the secondary battery current measuring device.

6. Hybrid power supply system according to claim 5, wherein the control device is configured to determine a power generation amount of the fuel cell (25) based on the charge amount calculated by the voltage-basis charge amount calculating device when the amount of current measured by the secondary battery current measuring device is not larger than a predetermined threshold current, and the control device is configured to determine the power generation amount of the fuel cell (25) based on the charge amount calculated by the current-basis charge amount calculating device when the amount of current measured by the secondary battery current measuring device is larger than the predetermined threshold current.

7. Hybrid power supply system according to claim 5 or 6, further comprising a forbidding means configured to forbid the control device to enlarge the electric power generated by the fuel cell (25) more than the electric power consumed by the operating device, when the charge amount of the secondary battery (26) calculated by the voltage-basis charge amount calculating device is larger than a predetermined amount.

8. Hybrid power supply system according to one of the claims 1 to 7, further comprising a means storing a warm-up mode power generation amount map used in the warm-up mode, in which the temperature of the fuel cell (25) or the temperature of the coolant is not higher than the predetermined threshold temperature.

9. Hybrid power supply system according to one of the claims 1 to 8, further comprising a means storing a normal operation mode power generation amount map for use in the normal operation mode in which the temperature of the fuel cell (25) or the temperature of the coolant is higher than the predetermined threshold temperature.

10. Hybrid power supply system according to claim 9, further comprising a timer, wherein the control device is configured to control the fuel cell (25) to renew the power generation amount at predetermined intervals by referring one of the warm-up mode power generation amount map and the normal operation mode power generation amount map that corresponds to the mode which occurs when the fuel cell (25) generates the electric power.

11. Hybrid power supply system according to one of the claims 1 to 10, wherein the secondary battery (26) is a lithium ion battery.

12. Hybrid power supply system according to one of the claims 1 to 11, being used as a power source for a motorcycle, a three-wheeled motored vehicle or a four-wheeled motored vehicle, wherein the operating device is a drive motor.

13. Method to warm-up a fuel cell (25) of a hybrid power supply system having a fuel cell (25) and a secondary battery (26), wherein until a temperature of the hybrid power supply system is not higher than a predetermined threshold temperature, in a warm-up mode, electric power generation by the fuel cell (25) is made larger than the amount of electric power consumed by the operating device, and wherein a surplus of the electric power thus generated by the fuel cell (25) is charged into the secondary battery (26).

## Patentansprüche

1. Hybrid-Leistungsversorgungssystem, mit:
einer Brennstoffzelle (25) zum In-Reaktion-Bringen von Wasserstoffgas, das aus einer Wasserstoffversorgungsvorrichtung zugeführt wird, und Sauerstoffgas, das von einer Sauerstoffversorgungseinrichtung zugeführt wird, so dass elektrische Leistung erzeugt wird;
einer Betriebseinrichtung, die durch die Verwendung der von der Brennstoffzelle (25) erzeugten elektrischen Leistung betrieben wird;
einer Temperatur-Messeinrichtung zur Messung einer Temperatur des Hybrid-Leistungsversorgungssystems;
einer Sekundärbatterie (26); und
einer Steuereinrichtung,
wobei die Steuereinrichtung ausgebildet ist, die durch die Brennstoffzelle (25) erzeugte elektrische Leistung derart zu steuern, dass die elektrische Leistung größer wird als eine von der Betriebseinrichtung aufgenommene elektrische Leistung in einem Aufwärmmodus, in welchem eine Temperatur des Hybrid-Leistungsversorgungssystems nicht höher ist als eine vorbestimmte Schwellentemperatur, und wobei die elektrische Leistung, die der von der Betriebseinrichtung aufgenommenen elektrischen Leistung entspricht, der Betriebseinrichtung zugeführt wird, und ein Überschuss der von der Brennstoffzelle (25) erzeugten elektrischen Leistung in die Sekundärbatterie (26) geladen wird.

2. Hybrid-Leistungsversorgungssystem nach Anspruch 1, das ferner aufweist: eine Kühleinrichtung zur Bereitstellung eines Kühlmittels zum Kühlen der Brennstoffzelle (25); und
eine Temperatur-Messeinrichtung zum Messen einer Temperatur der Brennstoffzelle (25) oder einer Temperatur des Kühlmittels, die die Temperatur des Hybrid-Leistungsversorgungssystems repräsentiert.

3. Hybrid-Leistungsversorgungssystem nach Anspruch 1 oder 2, wobei die Steuereinrichtung ausgebildet ist, die von der Brennstoffzelle (25) erzeugte elektrische Leistung kleiner als die von der Betriebseinrichtung aufgenommene elektrische Leistung während einer vorgegebenen Zeitdauer zu machen, nachdem der Aufwärmmodus abgeschlossen ist und das Hybrid-Leistungsversorgungssystem in einen normalen Betriebsmodus übergegangen ist, und wobei die Steuereinrichtung ausgebildet ist, die Sekundärbatterie (26) derart zu steuern, dass sie die Unterdeckung der von der Betriebseinrichtung aufgenommenen elektrischen Leistung bereitstellt.

4. Hybrid-Leistungsversorgungssystem nach einem der Ansprüche 1 bis 3, das ferner aufweist:
eine Ausgangsstrom-Messeinrichtung zur Messung einer Größe des Ausgangsstroms für die Betriebseinrichtung;
eine Ausgangsspannungs-Messeinrichtung zum Messen der Größe einer Ausgangsspannung für die Betriebseinrichtung; und
eine Einrichtung zur Berechnung der elektrischen Leistung, die ausgebildet ist, eine Größe der von der Betriebseinrichtung aufgenommenen elektrischen Leistung auf der Grundlage der Größe des Stroms, der von der Ausgangsstrom-Messeinrichtung gemessen wird, und der Größe der Spannung, die von der Ausgangsspannungs-Messeinrichtung gemessen wird, zu berechnen.

5. Hybrid-Leistungsversorgungssystem nach einem der Ansprüche 1 bis 3, das ferner aufweist:
eine Sekundärbatteriespannungs-Messeinrichtung zum Messen einer Größe einer Spannung der Sekundärbatterie (26);
eine Sekundärbatteriestrom-Messeinrichtung zur Messung einer Größe eines Stroms der Sekundärbatterie (26);
eine Einrichtung zur Berechnung einer Ladungsmenge auf Spannungsbasis, die ausgebildet ist, die Ladungsmenge der Sekundärbatterie (26) unter Verwendung der Größe der Spannung der Sekundärbatterie (26), die von der Sekundärbatteriespannungs-Messeinrichtung gemessen wird, zu berechnen; und
eine Einrichtung zur Berechnung der Ladungsmenge auf Strombasis, die ausgebildet ist, eine Ladungsmenge der Sekundärbatterie (26) durch Integration von Größen des Stroms, die in die Sekundärbatterie (26) und aus ihr herausfließen, zu berechnen, wobei die Größe des Stroms verwendet wird, der von der Sekundärbatteriestrom-Messeinrichtung gemessen wird.

6. Hybrid-Leistungsversorgungssystem nach Anspruch 5, wobei die Steuereinrichtung ausgebildet ist, die Größe der Leistungserzeugung der Brennstoffzelle (25) auf der Grundlage der Ladungsmenge zu berechnen, die von der Einrichtung zur Berechnung der Ladungsmenge auf Spannungsbasis berechnet wird, wenn die Größe des Stroms, der von der Sekundärbatteriestrom-Messeinrichtung gemessen wird, nicht größer als ein vorbestimmter Schwellenstrom ist, und die Steuereinrichtung ausgebildet ist, die Größe der Leistungserzeugung der Brennstoffzelle (25) auf der Grundlage der Ladungsmenge zu berechnen, die von der Einrichtung zur Berechnung der Ladungsmenge auf Strombasis berechnet wird, wenn die Größe des Stroms, der von der Sekundärbatteriestrom-Berechnungseinrichtung gemessen wird, größer als der vorbestimmte Schwellenstrom ist.

7. Hybrid-Leistungsversorgungssystem nach Anspruch 5 oder 6, das ferner eine Unterlassungseinrichtung aufweist, die ausgebildet ist, der Steuereinrichtung zu untersagen, die von der Brennstoffzelle (25) erzeugte elektrische Leistung über die die von der Betriebseinrichtung aufgenommene elektrische Leistung hinaus zu erhöhen, wenn die Ladungsmenge der Sekundärbatterie (26), die von der Einrichtung zur Berechnung der Ladungsmenge auf Spannungsbasis berechnet wird, größer als eine vorbestimmte Ladungsmenge ist.

8. Hybrid-Leistungsversorgungssystem nach einem der Ansprüche 1 bis 7, das ferner eine Einrichtung zur Speicherung einer Zuordnung für eine Leistungserzeugungsgröße während des Aufwärmmodus aufweist, die in dem Aufwärmmodus verwendet wird, in welchem die Temperatur der Brennstoffzelle (25) oder die Temperatur des Kühlmittels nicht höher als die vorbestimmte Schwellentemperatur ist.

9. Hybrid-Leistungsversorgungssystem nach einem der Ansprüche 1 bis 8, das ferner eine Einrichtung zur Speicherung einer Zuordnung für eine Leistungserzeugungsgröße im normalen Betriebsmodus aufweist, die im normalen Betriebsmodus zu verwenden ist, in welchem die Temperatur der Brennstoffzelle (25) oder die Temperatur des Kühlmittels höher ist als die vorbestimmte Schwellentemperatur.

10. Hybrid-Leistungsversorgungssystem nach Anspruch 9, das ferner einen Zeitgeber aufweist, wobei die Steuereinrichtung ausgebildet ist, die Brennstoffzelle (25) zur Aktualisierung der Leistungserzeugungsgröße in vorbestimmten Intervallen zu steuern, indem auf die Zuordnung für die Leistungserzeugungsgröße im Aufwärmmodus oder auf die Zuordnung für die Leistungserzeugungsgröße im normalen Betriebsmodus Bezug genommen wird, entsprechend dem Modus, der vorliegt, wenn die Brennstoffzelle (25) die elektrische Leistung erzeugt.

11. Hybrid-Leistungsversorgungssystem nach einem der Ansprüche 1 bis 10, wobei die Sekundärbatterie (26) eine Lithium-Ionen-Batterie ist.

12. Hybrid-Leistungsversorgungssystem nach einem der Ansprüche 1 bis 11, das als eine Leistungsquelle für ein Motorrad, ein dreirädriges Motorfahrzeug oder ein vierrädriges Motorfahrzeug verwendet wird, wobei die Betriebseinrichtung ein Antriebsmotor ist.

13. Verfahren zum Aufwärmen einer Brennstoffzelle (25) eines Hybrid-Leistungsversorgungssystems mit einer Brennstoffzelle (25) und einer Sekundärbatterie (26), wobei, bis zum Erreichen einer Temperatur des Hybrid-Leistungsversorgungssystems, die nicht höher als eine vorbestimmte Schwellentemperatur ist, in einem Aufwärmmodus eine elektrische Leistungserzeugung durch die Brennstoffzelle (25) größer gemacht wird als der Betrag an elektrischer Leistung, der von der Betriebseinrichtung aufgenommen wird, und wobei ein Überschuss der elektrischen Leistung, die von der Brennstoffzelle (25) auf diese Weise erzeugt ist, in die Sekundärbatterie (26) geladen wird.

## Revendications

1. Système d'alimentation en énergie hybride comprenant :
une pile à combustible (25) permettant la réaction d'un gaz hydrogène alimenté par un dispositif d'alimentation en hydrogène avec un gaz oxygène alimenté par un dispositif d'alimentation en oxygène pour produire de l'énergie électrique ;
un dispositif fonctionnel qui fonctionne en utilisant l'énergie électrique produite par la pile à combustible (25) ;
un dispositif de mesure de température permettant de mesurer une température du système d'alimentation en énergie hybride ;
une batterie secondaire (26) ; et
un dispositif de commande,
dans lequel le dispositif de commande est conçu pour commander l'énergie électrique produite par la pile à combustible (25) de manière à ce que l'énergie électrique devienne supérieure à l'énergie électrique consommée par le dispositif fonctionnel, dans un mode de démarrage, dans lequel une température du système d'alimentation en énergie hybride n'est pas supérieure à une température seuil prédéterminée, et
dans lequel l'énergie électrique qui correspond à l'énergie électrique consommée par le dispositif fonctionnel est fournie au dispositif fonctionnel et un excédent de l'énergie électrique ainsi produite par la pile à combustible (25) est chargé dans la batterie secondaire (26).

2. Système d'alimentation en énergie hybride selon la revendication 1, comprenant, en outre :
un dispositif de refroidissement permettant de délivrer un agent de refroidissement pour refroidir la pile à combustible (25) ; et
un dispositif de mesure de température permettant de mesurer une température de la pile à combustible (25) ou une température de l'agent de refroidissement représentant la température du système d'alimentation en énergie hybride.

3. Système d'alimentation en énergie hybride selon la revendication 1 ou 2, dans lequel
le dispositif de commande est conçu pour faire en sorte que l'énergie électrique produite par la pile à combustible (25) soit inférieure à l'énergie électrique consommée par le dispositif fonctionnel pendant un temps prédéfini, après que le mode de démarrage est terminé et que le système d'alimentation en énergie hybride est passé dans un mode de fonctionnement normal, et dans lequel
le dispositif de commande est conçu pour commander la batterie secondaire (26) pour qu'elle fournisse une quantité manquante d'énergie électrique destinée à être consommée par le dispositif fonctionnel.

4. Système d'alimentation en énergie hybride selon l'une des revendications 1 à 3, comprenant, en outre :
un dispositif de mesure de courant de sortie permettant de mesurer une quantité de courant de sortie pour le dispositif fonctionnel ;
un dispositif de mesure de tension de sortie permettant de mesurer une quantité de tension de sortie pour le dispositif fonctionnel ; et
un dispositif de calcul d'énergie électrique qui est conçu pour calculer une quantité d'énergie électrique destinée à être consommée par le dispositif fonctionnel en fonction de la quantité de courant mesurée par le dispositif de mesure de courant de sortie et de la quantité de tension mesurée par le dispositif de mesure de tension de sortie.

5. Système d'alimentation en énergie hybride selon l'une des revendications 1 à 3, comprenant, en outre :
un dispositif de mesure de tension de batterie secondaire permettant de mesurer une quantité de tension de la batterie secondaire (26) ;
un dispositif de mesure de courant de batterie secondaire permettant de mesurer une quantité de courant de la batterie secondaire (26) ;
un dispositif de calcul de quantité de charge sur la base de la tension qui est conçu pour calculer une quantité de charge de la batterie secondaire (26) en utilisant la quantité de tension de la batterie secondaire (26) mesurée par le dispositif de mesure de tension de batterie secondaire ; et
un dispositif de calcul de quantité de charge sur la base du courant qui est conçu pour calculer une quantité de charge de la batterie secondaire (26) par intégration des quantités de courant qui sont chargées dans la batterie secondaire (26) et déchargées par celle-ci en utilisant la quantité de courant mesurée par le dispositif de mesure de courant de batterie secondaire.

6. Système d'alimentation en énergie hybride selon la revendication 5, dans lequel le dispositif de commande est conçu pour déterminer une quantité de production d'énergie de la pile à combustible (25) en fonction de la quantité de charge calculée par le dispositif de calcul de quantité de charge sur la base de la tension lorsque la quantité de courant mesurée par le dispositif de mesure de courant de batterie secondaire n'est pas supérieure à un courant de seuil prédéterminé, et le dispositif de commande est conçu pour déterminer la quantité de production d'énergie de la pile à combustible (25) en fonction de la quantité de charge calculée par le dispositif de calcul de quantité de charge sur la base du courant lorsque la quantité de courant mesurée par le dispositif de mesure de courant de batterie secondaire est supérieure au courant de seuil prédéterminé.

7. Système d'alimentation en énergie hybride selon la revendication 5 ou 6, comprenant, en outre, un moyen d'interdiction conçu pour interdire au dispositif de commande d'augmenter l'énergie électrique produite par la pile à combustible (25) au-delà de l'énergie électrique consommée par le dispositif fonctionnel, lorsque la quantité de charge de la batterie secondaire (26) calculée par le dispositif de calcul de quantité de charge sur la base de la tension est supérieure à une quantité prédéterminée.

8. Système d'alimentation en énergie hybride selon l'une des revendications 1 à 7, comprenant, en outre, un moyen qui stocke une carte des quantités de production d'énergie en mode de démarrage, utilisée dans le mode de démarrage, dans lequel la température de la pile à combustible (25) ou la température de l'agent de refroidissement n'est pas supérieure à la température seuil prédéterminée.

9. Système d'alimentation en énergie hybride selon l'une des revendications 1 à 8, comprenant, en outre, un moyen qui stocke une carte des quantités de production d'énergie en mode de fonctionnement normal, destinée à être utilisée dans le mode de fonctionnement normal, dans lequel la température de la pile à combustible (25) ou la température de l'agent de refroidissement est supérieure à la température seuil prédéterminée.

10. Système d'alimentation en énergie hybride selon la revendication 9, comprenant, en outre, un chronomètre, dans lequel
le dispositif de commande est conçu pour commander la pile à combustible (25) pour qu'elle renouvelle la quantité de production d'énergie à des intervalles prédéterminés, en référence à la carte des quantités de production d'énergie en mode de démarrage ou à la carte des quantités de production d'énergie en mode de fonctionnement normal qui correspond au mode en cours lorsque la pile à combustible (25) produit l'énergie électrique.

11. Système d'alimentation en énergie hybride selon l'une des revendications 1 à 10, dans lequel la batterie secondaire (26) est une batterie lithium-ions.

12. Système d'alimentation en énergie hybride selon l'une des revendications 1 à 11, utilisé en tant que source d'énergie pour un motocycle, un véhicule à moteur à trois roues ou un véhicule à moteur à quatre roues, dans lequel le dispositif fonctionnel est un moteur d'entraînement.

13. Procédé de démarrage d'une pile à combustible (25) d'un système d'alimentation en énergie hybride comprenant une pile à combustible (25) et une batterie secondaire (26), dans lequel, tant qu'une température du système d'alimentation en énergie hybride n'est pas supérieure à une température seuil prédéterminée, dans un mode de démarrage, il est fait en sorte que la production d'énergie électrique par la pile à combustible (25) soit supérieure à la quantité d'énergie électrique consommée par le dispositif fonctionnel, et
dans lequel un excédent de l'énergie électrique ainsi produite par la pile à combustible (25) est chargé dans la batterie secondaire (26).
